(19) Europäisches Patentamt

European Patent Office

Office européen des brevets

(11) **EP 0 783 121 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(51) Int Cl.$^7$: **G02B 13/14**

(21) Anmeldenummer: **97100092.2**

(22) Anmeldetag: **04.01.1997**

(54) **Achrathermer Reimager**

Achrathermal reimager

Dispositif d'imagerie achrathermique

(84) Benannte Vertragsstaaten:
**DE FR GB IT**

(30) Priorität: **08.01.1996 DE 19600336**

(43) Veröffentlichungstag der Anmeldung:
**09.07.1997 Patentblatt 1997/28**

(73) Patentinhaber:
- **Carl Zeiss**
  **89518 Heidenheim (Brenz) (DE)**
  Benannte Vertragsstaaten:
  **DE FR IT**
- **CARL-ZEISS-STIFTUNG, HANDELND ALS CARL ZEISS**
  **89518 Heidenheim (Brenz) (DE)**
  Benannte Vertragsstaaten:
  **GB**

(72) Erfinder: **Ulrich, Wilhelm**
**73434 Aalen (DE)**

(56) Entgegenhaltungen:
**EP-A- 0 100 407**      **EP-A- 0 309 075**
**EP-A- 0 562 357**      **US-A- 4 679 891**

- **A.C. WALKER: "Achromatic doublets for simultaneous imaging of IR and visible radiation" APPLIED OPTICS, Bd. 20, Nr. 24, Dezember 1981, Seiten 4143-4144, XP002047523**

**Beschreibung**

Die Erfindung betrifft einen achrathermen Reimager, d.h. ein achromatisches und athermalisiertes System, bestehend aus Frontobjektiv, Zwischenbildebene einer Relaisoptik, insbesondere wie er im Infrarotbereich um 10 $\mu$m als Optik für Wärmebildgeräte benutzt wird.

Ein derartiger Reimager ist aus US 4,679,891 bekannt. Die Linsen bestehen aus Chalkogenidglas, Zinkselenid ZnSe, Zinksulfid ZnS und Germanium Ge. Das Frontobjektiv muß mindestens drei dicht beieinander liegende Linsen aus drei verschiedenen Materialien aufweisen. In allen Beispielen sind vor der Austrittspupille mindestens sechs Linsen angeordnet.

Aufgabe der Erfindung ist die Bereitstellung eines hochwertigen achrathermen Reimagers mit möglichst wenigen Linsen, insbesondere auch für hochauflösende Detektoren für das HDTV-Format.

Gelöst wird die Aufgabe durch einen Reimager nach Anspruch 1.

Gemäß Anspruch 1 besteht das Frontobjektiv aus nur zwei Linsen aus zwei Materialien, nämlich einer Negativlinse aus ZnSe oder ZnS und einer Positivlinse aus Chalkogenidglas, insbesondere der Sorte IG6 oder IG4 der Firma Vitron Spezialwerkstoffe GmbH, Jena. Dabei ist das Frontobjektiv selber achratherm.

Gemäß Anspruch 4 ist der Reimager - definitionsgemäß ein Teleskop mit Zwischenbild - aus genau vier oder fünf Linsen gebildet und für das mittlere Infrarot, insbesondere für Wellenlängen von 7,5 $\mu$m bis 10,5 $\mu$m, achromatisch besser als 80 %, vorzugsweise besser als 65 %, der Schärfentiefe und athermal in einem Temperaturbereich um die Normaltemperatur, wie er im Feldeinsatz zu erwarten ist, insbesondere von -40° C bis +70° C, besser als 60 % der Schärfentiefe.

Gemäß Anspruch 5 bilden jeweils eine Positivlinse und eine Negativlinse, letztere aus ZnSe oder ZnS, das Frontobjektiv wie auch die Relaisoptik.

Mit der Erfindung, wird die Linsenzahl eines achrathermen Reimagers bei höchster Qualität drastisch gesenkt. Die Erfindung geht aus von der Erkenntnis, daß beide Teilsysteme, Frontobjektiv und Relaisoptik, selbständig achratherm sein müssen, da sonst die chromatischen Variationen von Bildlage und Bildgröße nicht gleichzeitig korrigiert werden können und die Lage des Zwischenbildes variiert.

Der erfindungsgemäßen Konstruktion wird dazu die Lösung des folgenden Gleichungssystems zugrundegelegt, das für die Annahme dünner Linsen ohne Luftabstand gilt:

1. Brennweitenbedingung: $\varphi_1 + \varphi_2 = \Phi = 1$
2. Achromasiebedingung: $\varphi_1/\nu_1 + \varphi_2/\nu_2 = 0$
3. Athermalisierungsbedingung: $\tau_1 * \varphi_1 + \tau_2 * \varphi_2 = 0$
4. Aus diesen Bedingungen ergibt sich die Forderung:

$$\nu_1 * \tau_1 = \nu_2 * \tau_2$$

Die einzelnen Parameter besitzen dabei folgende Bedeutung:

normierte Brechkraft der Teilsysteme: $\Phi = 1$
Brechkraft der Einzellinsen: $\varphi_1$, $\varphi_2$
Abbezahl (Dispersion) : $\nu = (n_{9\mu} - 1) / (n_{7,5\mu} - n_{10,5\mu})$
temperaturabhängiger Brechzahländerungskoeffizient: dn/dT
temperaturabhängiger Ausdehnungskoeffizient: $\alpha$
integraler Temperaturkoeffizient: $\tau = (1 + dn/dT) / (1 + \alpha) - 1 \approx dn/dT - \alpha$ (für $\alpha \ll 1$)

Im folgenden sind die Konstanten verschiedener infrarottransparenter Materialien aufgelistet.

| Material | $\nu$ | dn/dT*$10^6$ | $\alpha$*$10^6$ | $\tau$*$10^6$ | $\nu$*$\tau$*$10^3$ |
|---|---|---|---|---|---|
| Ge | 886 | 400 | 5,7 | 394 | 349 |
| ZnSe | 87 | 60 | 7,6 | 52 | 4,5 |
| ZnS | 35 | 43 | 7,8 | 35 | 1,2 |
| IG4 | 262 | 36 | 20,4 | 16 | 4,2 |
| IG6 | 228 | 41 | 20,7 | 20 | 4,6 |

Dieser Tabelle ist zu entnehmen, wie gut die verschiedenen Materialien zueinander passen: Man erkennt, daß sich besonders gut die Chalkogenidgläser IG4 und IG6 als Positivlinsen in Kombination mit ZnSe als Negativlinse eignen. Auch ZnS ist als Partner in der Negativlinse geeignet, vor allem wenn es in erster Linie auf die Achromasie ankommt, denn durch die extreme Differenz in der Dispersion können die Einzelbrechkräfte klein gehalten werden.

Weitere vorteilhafte Ausführungsformen sind in den Unteransprüchen wiedergegeben.

Auch für den Reimager nach Anspruch 1 ist gemäß den Ansprüchen 2 und 3 vorgesehen, daß die Relaisoptik aus höchstens drei Linsen besteht, bzw. daß dabei eine Negativlinse aus ZnS oder ZnSe besteht und eine Positivlinse aus dem gleichen Chalkogenidglas, das schon im Frontobjektiv verwendet wird.

Der besonders vorteilhafte Ansatz der Erfindung kommt im Anspruch 6 zum Ausdruck, wonach das Frontobjektiv wie die Relaisoptik je einzeln achratherm ausgebildet sind.

Nach Anspruch 7 ist eine gleichmäßige Verteilung der Brechkräfte, keine Linse hat wesentlich mehr als die doppelte Brechkraft des Gesamtsystems, vorgesehen.

Nach den Ansprüchen 8 und 9 sind ein bis zwei asphärische Linsenflächen, davon eine im Frontobjektiv, vorgesehen.

Nach Anspruch 16 sind die Asphären rotationssymmetrisch, die Pfeilhöhe p als Funktion des Radius h ist eine Potenzreihenentwicklung mit nur geraden Exponenten, also

$$p(h) = h^2 \left( R \left(1 + \sqrt{1-(1+k)\ h^2/R^2}\right)\right) + c_1\ h^4 + \ldots + c_n\ h^{2n+2}$$

mit R = Scheitelradius, k = konische Konstante, $c_1 \ldots c_n$ asphärische Konstanten. Für diese Potenzreihenentwicklung sind auch die Asphärendaten in den Tabellen angegeben.

Anspruch 10 legt fest, daß alle Positivlinsen aus Chalkogenidglas bestehen, wie dies in den gezeigten Ausführungsbeispielen der Fall ist und aufgrund der oben gezeigten Tabelle 1 vorteilhaft ist.

Die Ansprüche 11-12 und 19 betreffen die Anpassung an serienmäßig erhältliche Infrarotdetektoreinheiten. Diese gibt es als Zeilendetektoren, bei den Beispielen 1-7 vorgesehen, oder als zweidimensionale Arrays, wie bei den Beispielen 8-10 vorgesehen.

Diese Detektoren müssen zur Unterdrückung von Untergrundsignalen gekühlt werden und sind darum in Dewargefäßen eingebaut, die ein Fenster aus einer Germanium-Planplatte als Einlaß für die IR-Strahlung aufweisen. Die Konstruktion aller Ausführungsbeispiele berücksichtigt das durch die Anordnung einer Planplatte aus Germanium und die Lage der Austrittspupille.

Auch die Narzißblende in der Zwischenbildebene dient der Anpassung an den Detektor. Störende Rückreflexe der vom Detektor selbst ausgehenden IR-Strahlung werden dadurch so weit als möglich vermieden.

Die Ansprüche 14 und 15 geben Toleranzen von $\pm$ 0,5 % Brennweitenvariation über alle Temperaturen von -40° C bis +70° C und alle Wellenlängen von 7,5 μm bis 10,5 μm bzw. die maximale Schnittweitenablage innerhalb der beugungsbegrenzten Schärfentiefe von $\pm$ 40 μm an. Die Bezeichnung "achratherm" für den erfindungsgemäßen Reimager ist also voll gerechtfertigt.

Die Ansprüche 17 und 18 gehen nochmals auf das Konstruktionsprinzip der Verwendung möglichst weniger Linsenmaterialien ein. Im Frontobjektiv bzw. im gesamten Reimager genügen nur zwei Linsenmaterialien, das Material des Detektoreintrittfensters gehört nicht dazu. Gegenüber der US 4,679,891 wird also mindestens auf ein Material verzichtet.

Die Ansprüche 20 und 21 betreffen insbesondere die Ausführung mit einem zweidimensionalen Detektorarray, wo eine hinter dem Frontobjektiv angeordnete Planplatte vorgesehen wird, die dann durch geringes Kippen einen Bildversatz bewirkt und so das "Interlace"-Verfahren zur Erhöhung der Auflösung ermöglicht.

Näher erläutert wird die Erfindung anhand der Ausführungsbeispiele und der Zeichnung.

Es zeigen:

Figur 1 den Linsenschnitt eines ersten, fünflinsigen Ausführungsbeispiels;

Figur 2 die Beugungs-Modulationstransferfunktion und den Kontrast als Funktion der Defokussierung für verschiedene Bildhöhen;

Figuren 3-8 die Linsenschnitte der vierlinsigen Beispiele 2-7;

Figur 9 die Beugungs-Modulationstransferfunktion und den Kontrast als Funktion der Defokussierung für verschiedene Strahlhöhen für das Beispiel 7;

Figuren 10-12    die Linsenschnitte zu den drei Ausführungsbeispielen 8-10, welche für einen zweidimensionalen IR-Detektor nach HDTV-Standard vorgesehen sind;

Figur 13    die Beugungs-Modulationstransferfunktion, tangential und radial für verschiedene Strahlhöhen zum Beispiel 10.

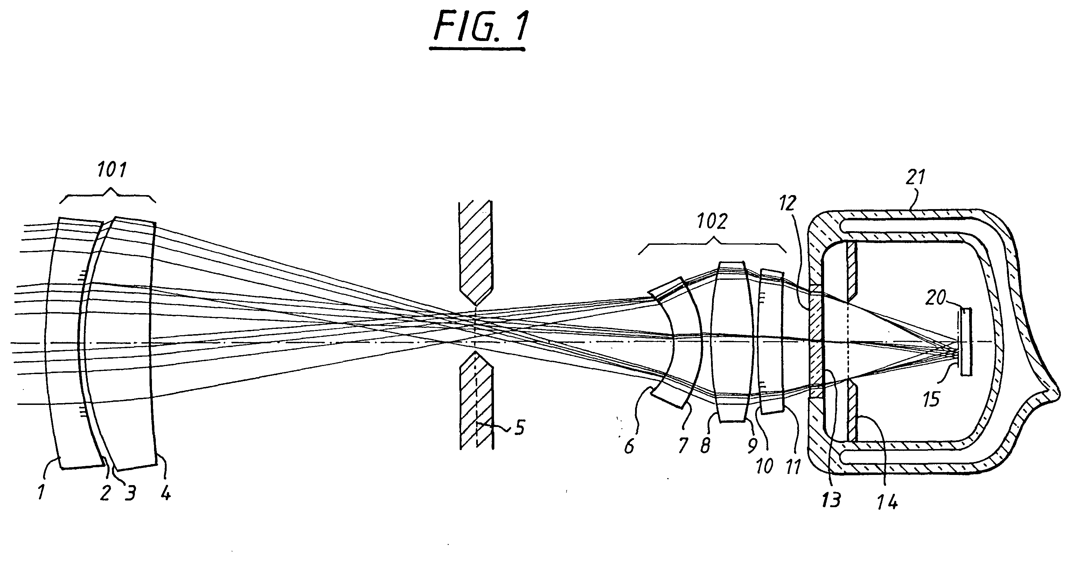

Der in der Figur 1 als Beispiel 1 dargestellte fünflinsige achratherme Reimager besteht aus dem Frontobjektiv 101 und der Relaisoptik 102 (die auch als Okular bezeichnet werden kann). In der Bildebene 15 ist ein IR-Zeilendetektor 20 angeordnet. Er wird gekühlt und sitzt zur Isolation in einem Dewargefäß 21, das mit einem Fenster aus Germanium mit den beiden planparallelen Flächen 12, 13 abgeschlossen ist.

In der Austrittspupille 14 liegt eine gekühlte Aperturblende (cold shield), eine Narziß-Blende ist in der Zwischenbildebene 5 angeordnet.

Eine negative Meniskuslinse aus ZnSe mit den Flächen 1 und 2, wovon die Hinterfläche 2 asphärisch ist, und eine positive Linse aus dem Chalkogenidglas IG6 der Firma Vitron, Jena, mit den Flächen 3 und 4 bilden das Frontobjektiv.

Eine negative Meniskuslinse aus ZnSe, eine positive Linse aus IG6 und eine schwach positive Germanium-Linse mit der asphärischen Frontfläche 10 und der Hinterfläche 11 bilden die Relaisoptik. Tabelle 1 gibt die Radien und Abstände und weiteren Daten dazu.

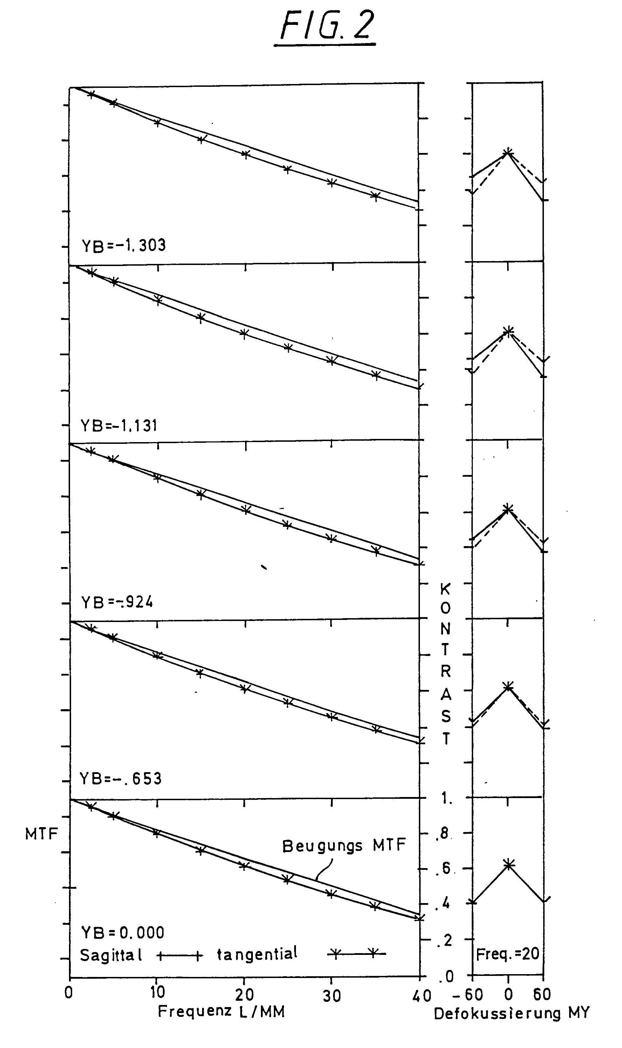

Figur 2 zeigt die für dieses Ausführungsbeispiel erreichte Beugungs-Modulationstransferfunktion und den Kontrast als Funktion der Defokussierung für verschiedene Strahlhöhen.

Der tangentiale und radiale Kontrast ist nahezu beugungsbegrenzt.

Die weiteren Ausführungsbeispiele kommen mit nur vier Linsen mit zwei Asphärenflächen aus.

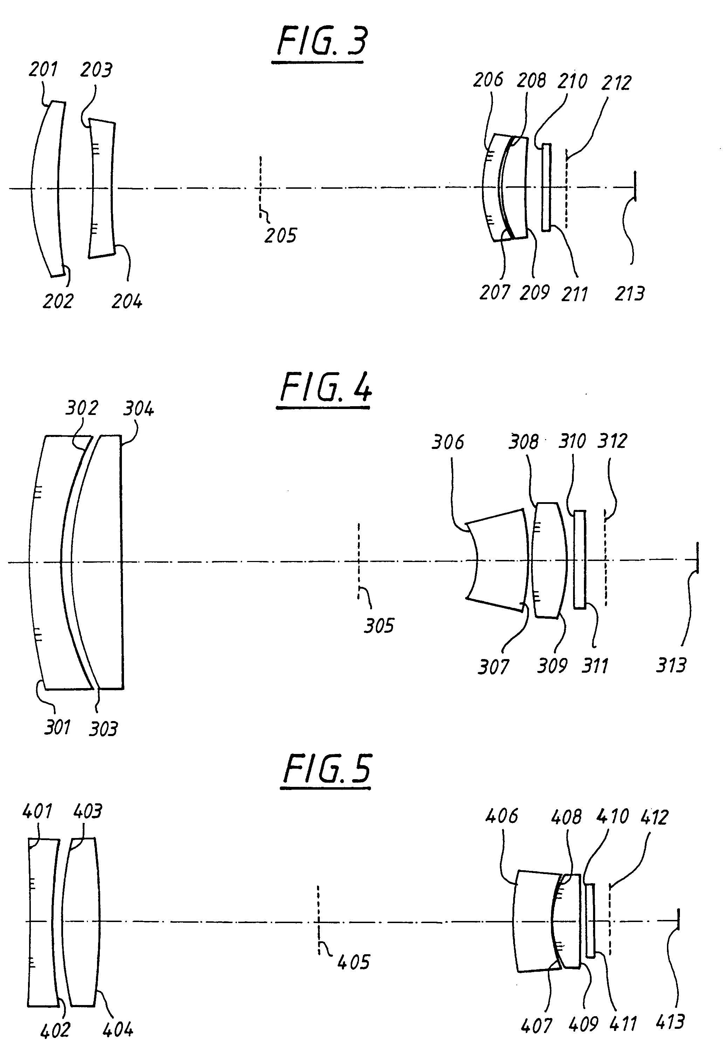

Figur 3 zeigt den Linsenschnitt des zweiten Ausführungsbeispieles, Tabelle 2 gibt die Daten dazu. Die Germanium-Planplatte 210, 211, die Austrittspupille 212 und die Bildebene 213 entsprechen den gleichen Vorgaben wie bei Figur 1. Hier werden drei Materialien verwendet (ZnS, ZnSe, IG6).

Figur 4 zeigt den Linsenschnitt des dritten Beispiels, dazu die Tabelle 3. Hier sind nur ZnSe und IG6 verwendet. Die Fläche 308 trägt eine Asphäre, was auf dem Glas IG6 allerdings nicht so gut zu fertigen ist, wie auf ZnSe oder ZnS.

Figur 5 zeigt den Linsenschnitt des vierten Beispiels, dazu die Tabelle 4 mit den Daten.

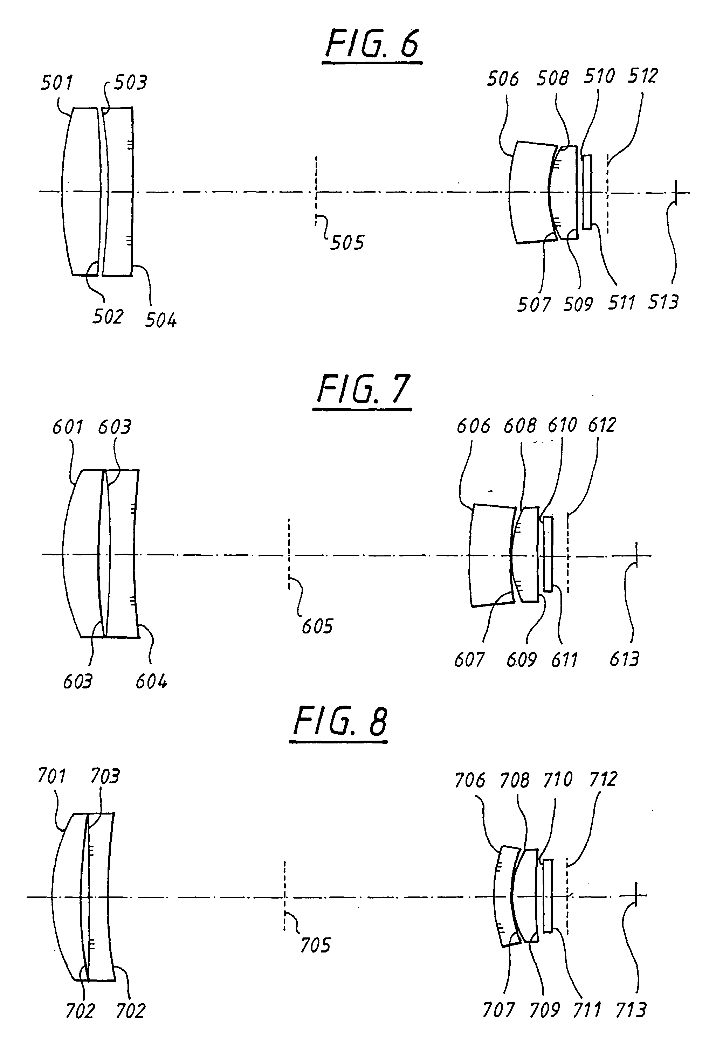

Figur 6 zeigt ein fünftes Ausführungsbeispiel entsprechend Tabelle 5.

Figur 7 zeigt ein sechstes Ausführungsbeispiel entsprechend Tabelle 6.

Figur 8 zeigt ein siebtes Ausführungsbeispiel entsprechend Tabelle 7.

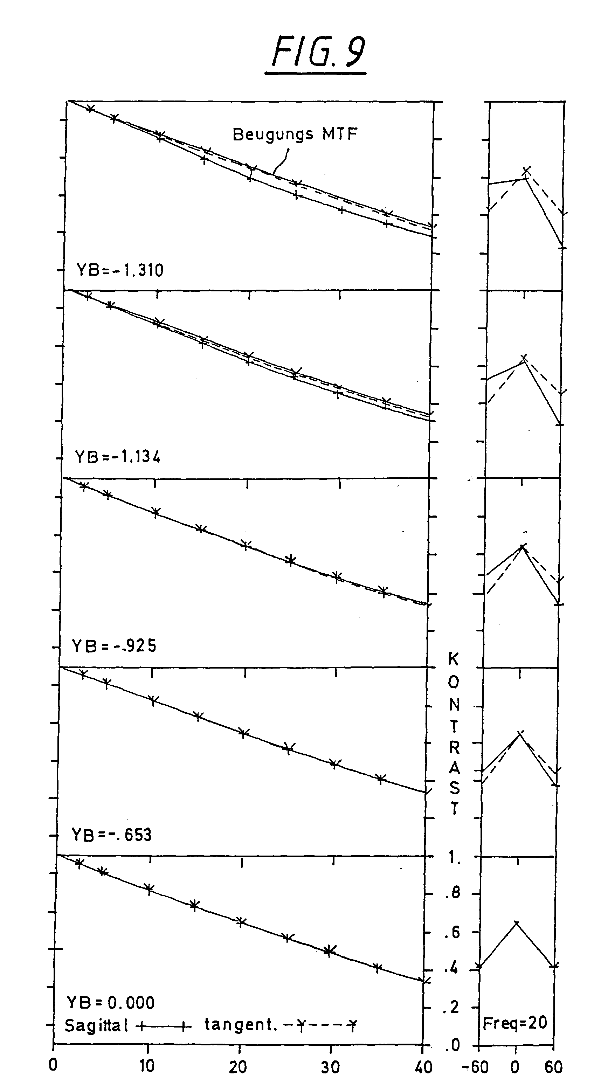

Hierzu zeigt Figur 9 in einer der Figur 2 entsprechenden Darstellung die Modulationstransferfunktion und den Kontrast als Funktion der Defokussierung für verschiedene Strahlhöhen YB bei der Ortsfrequenz 20 Linien/mm.

Es liegt beugungsbegrenzte Korrektion bis fast zur Bildecke hin vor.

Die bisherigen Beispiele zeigen Ausführungen zur Verwendung mit Zeilendetektoren, wie sie bei Infrarotkameras derzeit üblich sind. Die Beispiele zeigen, daß in vielen Varianten mit nur 4-5 Linsen aus 2, höchstens 3 Materialien unter Einbeziehung von zwei Asphären hervorragende achratherme Reimager erzielt werden.

Mehr Linsen werden jedoch auch nicht benötigt, wenn die Auslegung für ein zweidimensionales Detektor-Array nach HDTV-Standards (High Definition Television) erfolgt, wofür die folgenden Beispiele ausgelegt sind.

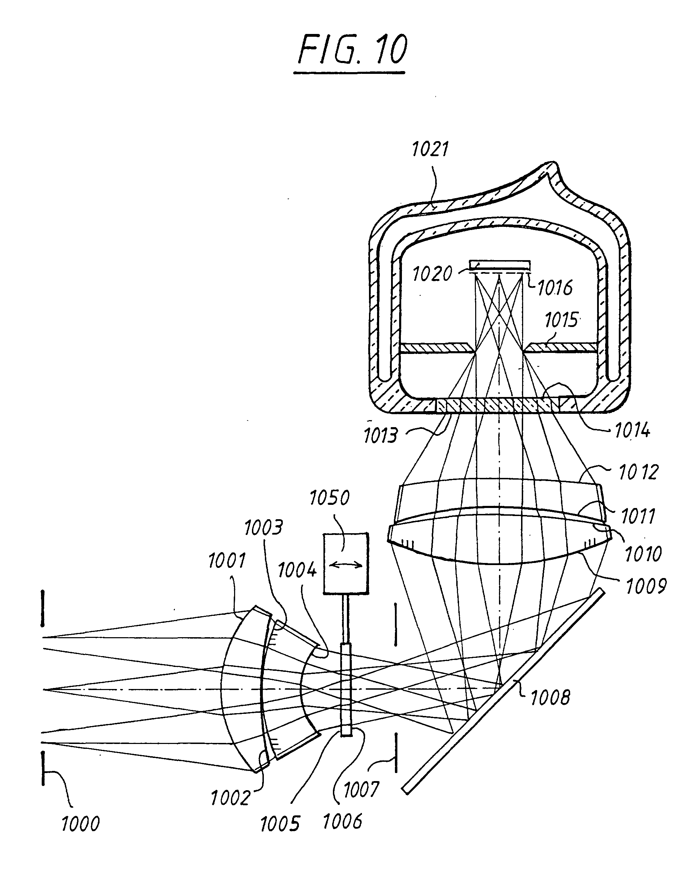

Das achte Ausführungsbeispiel der Figur 10 hat die Daten der Tabelle 8. 1000 ist die Eintrittspupille. Der Umlenkspiegel 1008 dient rein zur Anpassung an die Einbaugeometrie, er kann ersatzlos gestrichen werden, ein gleichartiger Spiegel ist aber auch bei den Beispielen 1-7 bei Bedarf unterzubringen.

Auch hier ist in der Bildebene 1016 der Detektor 1020 untergebracht, der gekühlt werden muß und deshalb in einem Dewargefäß 1021 angeordnet ist, das ein Ge-Eintrittsfenster 1013, 1014 und die Blende 1015 in der Austrittspupille des Objektivs enthält. Um die Erhöhung der Bildauflösung nach dem Interlace-Verfahren zu ermöglichen, ist hinter dem Frontobjektiv 1001-1004 eine ZnSe-Planplatte 1005, 1006 angeordnet, die durch einen Antrieb 1050 gekippt werden kann, so daß das Bild in der Bildebene 1016 etwa um die halbe Pixelgröße - das halbe Rastermaß des Detektor-Arrays 1020 - seitlich versetzt wird. Auch dieser Teil kann entfallen, die Korrektur des Reimagers ist dann aber anzupassen.

Die Brennweite beträgt f' = 42,88 mm, die Öffnungszahl K = 1,7, der Eintrittspupillendurchmesser ist 25,22 mm, die bildseitige numerische Apertur $NA^{\iota-}$ = 0,294. Die Länge von der Detektorebene 1016 bis zur Eintrittsfläche 1113 des Ge-Eintrittsfensters beträgt 11,52 mm, der halbe objektseitige Feldwinkel w' = 7,65°.

Der Spektralbereich beträgt wie bei den vorigen Beispielen λ = 7,5 μm bis 10,5 μm der Temperaturbereich umfaßt T ± ΔT = 20° C ± 50° C.

Auch hier genügen vier Linsen mit zwei Asphären 1003, 1009 vollauf, obwohl die transportierte Lichtröhre (Produkt aus Apertur mit Feld) etwa auf das Vierfache gesteigert ist.

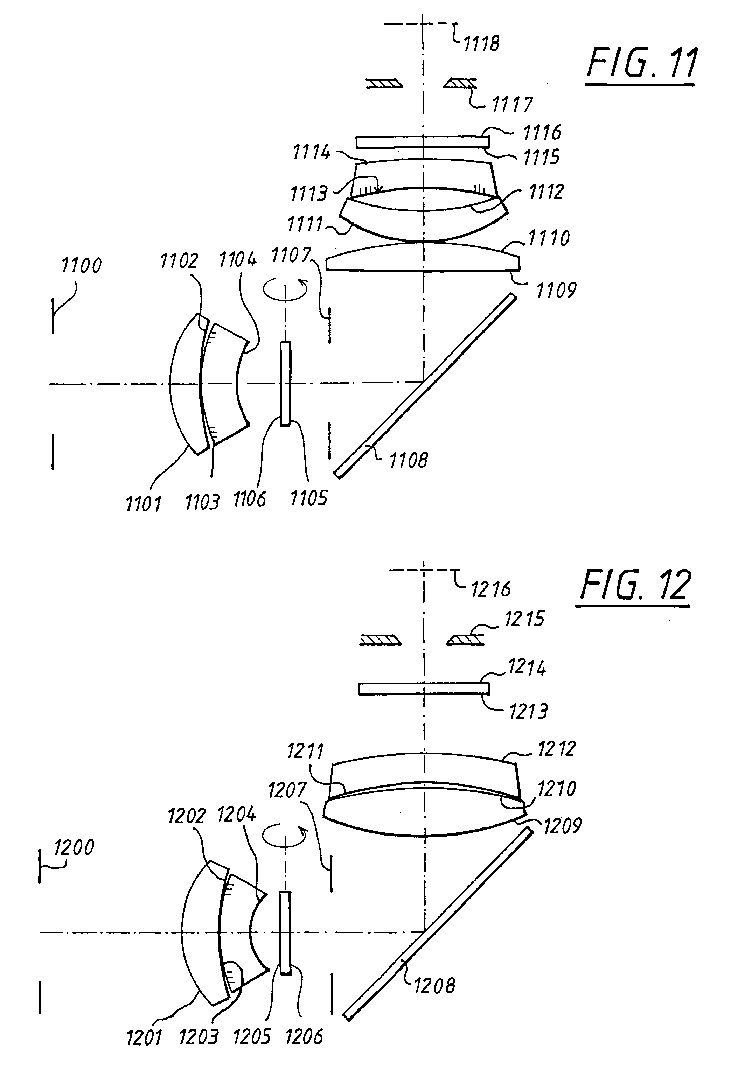

Das neunte Beispiel der Figur 11 mit den Daten der Tabelle 9 weist wie das erste Ausführungsbeispiel insgesamt fünf Linsen, davon drei im Okular, auf. Diese Variante hat den herstellungstechnischen Vorteil, daß die asphärischen Flächen 1103 und 1113 nicht in das Chalkogenid-Glas IG6 eingearbeitet werden müssen. Bei der Version 8 der Figur 10 ist die zweite Asphärenfläche 1109 auf IG6, ähnlich wie auch beim folgenden Beispiel, aufgebracht.

Das zehnte Beispiel der Figur 12 gemäß Tabelle 10 weist wiederum vier Linsen auf. Es entspricht weitestgehend dem Beispiel 8, ist jedoch auf kürzeste Baulänge angelegt: die Länge von der Eintrittspupille (1000 bzw. 1200) bis zur Bildebene (1016 bzw. 1216) beträgt beim Beispiel 8 210 mm, hier beim Beispiel 10 nur noch 200 mm. Eine weitere Baulängenreduzierung würde eine deutliche Systemanspannung bedeuten und somit sehr enge Fertigungstoleranzen bedingen.

Die Ausführung nach Figur 11 ist noch etwas kürzer (195 mm) und noch weiter verkürzbar, hat aber eine Linse mehr mit dem damit verbundenen Herstellungsaufwand.

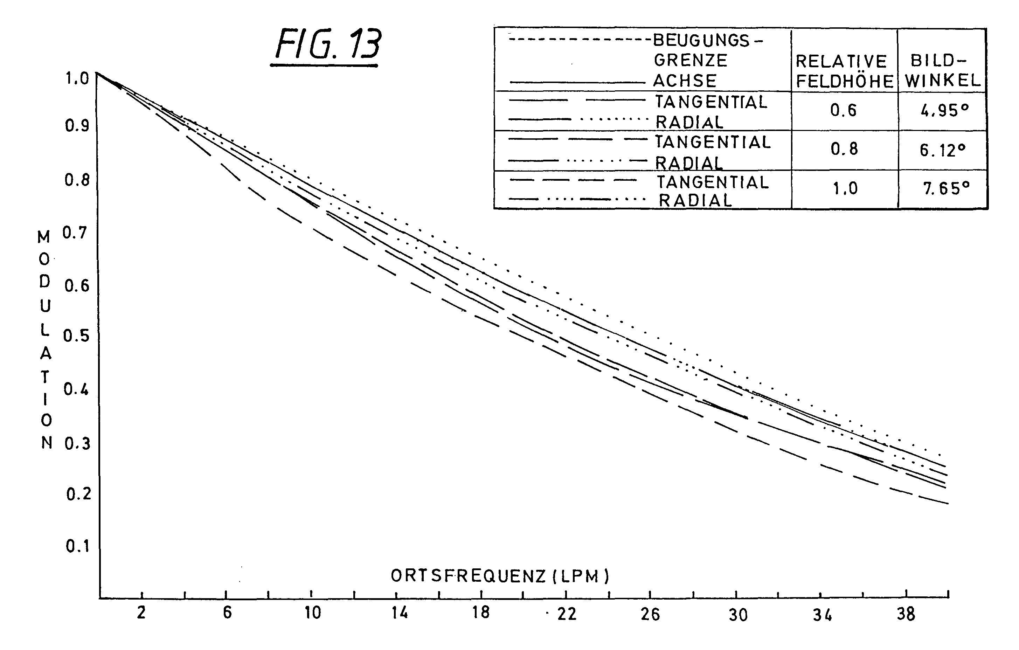

Die Figur 13 zeigt zum zehnten Beispiel die Beugungs-Modulationstransferfunktion. Auch bei vollem Bildwinkel ist der Modulationsverlust stabil und gering.

Bei einer Temperaturänderung von +50°C ändert sich die Bildlage um $\Delta s'$ und die Brennweite um $\Delta f'$. Die Brennweitenänderung ergibt einen maximalen Versatz von $\Delta 1'$ am Bildrand. Die Schärfentiefe beträgt $\Delta s' = \pm 50$ μm für die Beispiele 8 bis 10. Tabelle 11 gibt die erreichte Athermalisierung für Beispiel 8 bis 10 an. Fassungsmaterial ist dabei Titan.

Tabelle 11

| Beispiel | $\Delta s'$ | $\Delta f'$ | $\Delta l'$ |
|---|---|---|---|
| 8 | $\pm$0,00mm | +0,15% | +9μ |
| 9 | $\pm$0,00mm | +0,16% | +9μ |
| 10 | -0,02mm | +0,07% | +4μ |

Die chromatische Längsabweichung wird in der folgenden Tabelle 12 als Ablagen der besten Einstellebene $\Delta$ BEE für die Wellenlängen 8 μm und 10,5 μm bezogen auf eine Grundwellenlänge von 9 μm angegeben.

Für die Beispiele 1-7 ist: k = 1,5 und damit die Schärfentiefe $= \pm 2\lambda k^2 = \pm 40$ μm, für die Beispiele 8-10 ist: k = 1,7 und damit die Schärfentiefe $= \pm 2 \lambda k^2 = \pm 50$ μm als Vergleichsmaßstab heranzuziehen.

Tabelle 12

| Beispiel | $\Delta$ BEE $_{8\mu}$ | $\Delta$ BEE$_{10,5\mu}$ |
|---|---|---|
| 1 | - 25 μ | + 30 μ |
| 2 | $\approx$ 0 | + 10 μ |
| 3 | - 15 μ | + 25 μ |
| 4 | - 15 μ | + 15 μ |
| 5 | - 25 μ | + 15 μ |
| 6 | - 25 μ | + 25 μ |
| 7 | $\approx$ 0 | $\approx$ 0 |
| 8 | - 30 μ | $\approx$ 0 |
| 9 | - 20 μ | - 20 μ |
| 10 | - 30 μ | $\approx$ 0 |

Die angegebenen Beispiele zeigen also, daß mit vielen Varianten des erfindungsgemäßen achrathermen Reimagers hohe Auflösung bei chromatischer und thermischer Korrektur unterhalb der Grenze der Schärfentiefe erreicht wird.

Tabelle 1

| f' = 15 mm | | | |
|---|---|---|---|
| Nr. | Radius | Dicke | Glas |
| 1 | 46.9760 | 10.000 | |
| 2 | 25.0866 Asphäre | 2.500 | ZnSe |
| 3 | 21.9090 | .500 | |

Tabelle 1   (fortgesetzt)

| f' = 15 mm | | | |
|---|---|---|---|
| Nr. | Radius | Dicke | Glas |
| | | 5.200 | IG6 |
| 4 | 86.5960 | | |
| | | 25.902 | |
| 5 | Plan | | |
| | | 15.823 | |
| 6 | -5.5430 | | |
| | | 2.300 | ZnSe |
| 7 | -9.3057 | | |
| | | .573 | |
| 8 | 26.7990 | | |
| | | 3.500 | IG6 |
| 9 | -33.7380 | | |
| | | .300 | |
| 10 | 47.3241 Asphäre | | |
| | | 1.900 | Ge |
| 11 | 101.4500 | | |
| | | 2.250 | |
| 12 | Plan | | |
| | | 1.000 | Ge |
| 13 | Plan | | |
| | | 2.000 | |
| 14 | Plan | | |
| | | 8.750 | |
| 15 | Plan | | |

Asphären:
Fläche 2
Konstanten:
    Scheitelradius(y) = 25.08658 Kappa(y) = .002340
Entwicklungskonstanten:
    .8058753E-05 .3657305E-08 .2752318E-09 .0000000E+00
Fläche 10
Konstanten:
    Scheitelradius(y) = 47.32405 Kappa(y) = -.040660
Entwicklungskonstanten:
-.6614489E-04 .1768410E-06 -.7598492E-08 .0000000E+00

Tabelle 2

| Nr. | Radius | Dicke | Glas |
|---|---|---|---|
| | | 52.900 | |
| 201 | 22.0670 | | |
| | | 3.600 | IG6 |
| 202 | 60.8660 | | |
| | | 4.500 | |
| 203 | -77.9635 Asphäre | | |
| | | 2.500 | ZnSe |
| 204 | 100.0000 | | |
| | | 18.750 | |
| 205 | Plan | | |

Tabelle 2   (fortgesetzt)

| Nr. | Radius | Dicke | Glas |
|---|---|---|---|
| | | 28.290 | |
| 206 | 13.0900 Asphäre | | |
| | | 2.000 | ZnS |
| 207 | 10.5930 | | |
| | | .600 | |
| 208 | 12.1440 | | |
| | | 2.900 | IG6 |
| 209 | 58.7150 | | |
| | | 2.200 | |
| 210 | Plan | | |
| | | 1.000 | Ge |
| 211 | Plan | | |
| | | 2.000 | |
| 212 | Plan | | |
| | | 8.750 | |
| 213 | Plan | | |

Asphären:
Fläche 203
Konstanten:
Scheitelradius(y) = -77.96350 Kappa(y) = -1.000
Entwicklungskonstanten:
.72619900E-05 .6800200E-07 .0000000E+00 .0000000E+00
Fläche 206
Konstanten:
Scheitelradius (y) = 13,0900 Kappa (y) = -1.000
Entwicklungskonstanten:
-.3150800E-06 .1383800E-06 .0000000E+00 .0000000E+00

Tabelle 3

| Nr. | Radius | Dicke | Glas |
|---|---|---|---|
| | | 63.439 | |
| 301 | 42.2927 Asphäre | | |
| | | 3.000 | ZnSe |
| 302 | 22.6631 | | |
| | | 1.000 | |
| 303 | 25.5188 | | |
| | | 4.800 | IG6 |
| 304 | 647.0557 | | |
| | | 23.811 | |
| 305 | Plan | | |
| | | 11.300 | |
| 306 | -6.1262 | | |
| | | 5.000 | ZnSe |
| 307 | -21.3669 | | |
| | | .200 | |
| 308 | 17.0686 Asphäre | | |
| | | 3.400 | IG6 |
| 309 | -17.3063 | | |
| | | .800 | |

Tabelle 3   (fortgesetzt)

| Nr. | Radius | Dicke | Glas |
|---|---|---|---|
| 310 | Plan | | Ge |
| | | 1.000 | |
| 311 | Plan | | |
| | | 2.000 | |
| 312 | Plan | | |
| | | 8.750 | |
| 313 | Plan | | |

| Asphären: |
|---|
| Fläche 301 |
| Konstanten: |
| Scheitelradius(y) = 42.29266 Kappa(y) = -1.000000 |
| Entwicklungskonstanten: |
| -.1582073E-05 -.4896612E-08 .0000000E+00 .0000000E+00 |
| Fläche 308 |
| Konstanten: |
| Scheitelradius(y) = 17.06862 Kappa(y) = -1.000000 |
| Entwicklungskonstanten: |
| -.3475706E-03 .2280306E-05 .4484519E-07 -.1462254E-08 |

Tabelle 4

| Nr. | Radius | Dicke | Glas |
|---|---|---|---|
| | | 44.718 | |
| 401 | -599.0998 Asphäre | | |
| | | 3.000 | ZnSe |
| 402 | 87.4600 | | |
| | | 1.000 | |
| 403 | 53.5957 | | |
| | | 4.800 | IG6 |
| 404 | -87.8005 | | |
| | | 27.982 | |
| 405 | Plan | | |
| | | 24.850 | |
| 406 | 24.4608 | | |
| | | 5.000 | ZnSe |
| 407 | 13.1356 | | |
| | | .200 | |
| 408 | 10.8944 Asphäre | | |
| | | 3.400 | IG6 |
| 409 | -1271.9981 | | |
| | | .800 | |
| 410 | Plan | | |
| | | 1.000 | Ge |
| 411 | Plan | | |
| | | 2.000 | |
| 412 | Plan | | |

Tabelle 4   (fortgesetzt)

| Nr. | Radius | Dicke | Glas |
|---|---|---|---|
|  |  | 8.750 |  |
| 413 | Plan |  |  |

   Asphären:
Fläche 401
Konstanten:
Scheitelradius(y) = -599.09977 Kappa(y) = -1.000000
Entwicklungskonstanten:
-.8428285E-05 -.3956574E-08 .0000000E+00 .0000000E+00
Fläche 408
Konstanten:
Scheitelradius(y) = 10.89437 Kappa(y) = -1.000000
Entwicklungskonstanten:
-.5138828E-05 -.7401475E-07 .0000000E+00 .0000000E+00

Tabelle 5

| Nr. | Radius | Dicke | Glas |
|---|---|---|---|
|  |  | 49.220 |  |
| 501 | 44.1079 |  |  |
|  |  | 4.800 | IG6 |
| 502 | -132.0159 |  |  |
|  |  | 1.000 |  |
| 503 | -64.8929 |  |  |
|  |  | 3.000 | ZnSe |
| 504 | -670.0914 Asphäre |  |  |
|  |  | 23.480 |  |
| 505 | Plan |  |  |
|  |  | 24.850 |  |
| 506 | 25.2586 |  |  |
|  |  | 5.000 | ZnSe |
| 507 | 14.0250 |  |  |
|  |  | .200 |  |
| 508 | 11.0332 Asphäre |  |  |
|  |  | 3.400 | IG6 |
| 509 | 983.9787 |  |  |
|  |  | .800 |  |
| 510 | Plan |  |  |
|  |  | 1.000 | Ge |
| 511 | Plan |  |  |
|  |  | 2.000 |  |
| 512 | Plan |  |  |

Tabelle 5   (fortgesetzt)

| Nr. | Radius | Dicke | Glas |
|---|---|---|---|
| | | 8.750 | |
| 513 | Plan | | |

| Asphären: |
|---|
| Fläche 504 |
| Konstanten: |
| Scheitelradius(y) = -670.09141 Kappa(y) = -1.000000 |
| Entwicklungskonstanten: |
| .4782106E-05 -.1625202E-07 .0000000E+00 .0000000E+00 |
| Fläche 508 |
| Konstanten: |
| Scheitelradius(y) = 11.03324 Kappa(y) = -1.000000 |
| Entwicklungskonstanten: |
| -.1089224E-04 .0000000E+00 .0000000E+00 .0000000E+00 |

Tabelle 6

| Nr. | Radius | Dicke | Glas |
|---|---|---|---|
| | | 53.979 | |
| 601 | 21.7506 | | |
| | | 4.800 | IG6 |
| 602 | 65.1818 | | |
| | | 1.500 | |
| 603 | -111.3462 | | |
| | | 3.000 | ZnSe |
| 604 | 79.7375 Asphäre | | |
| | | 19.721 | |
| 605 | Plan | | |
| | | 23.350 | |
| 606 | 51.1790 | | |
| | | 5.000 | ZnSe |
| 607 | 23.6351 | | |
| | | .200 | |
| 608 | 11.0598 Asphäre | | |
| | | 3.400 | IG6 |
| 609 | 133.8056 | | |
| | | .800 | |
| 610 | Plan | | |
| | | 1.000 | Ge |
| 611 | Plan | | |
| | | 2.000 | |
| 612 | Plan | | |

Tabelle 6   (fortgesetzt)

| Nr. | Radius | Dicke | Glas |
|---|---|---|---|
| 613 | Plan | 8.750 | |
| Asphären: Fläche 604 Konstanten: Scheitelradius (y) = 79.73745 Kappa(y) = -1.000000 Entwicklungskonstanten: .3959487E-05 -.5457340E-07 .0000000E+00 .0000000E+00 Fläche 608 Konstanten: Scheitelradius(y) = 11.05978 Kappa (y) = -1.000000 Entwicklungskonstanten: -.2577051E-04 .0000000E+00 .0000000E+00 .0000000E+00 | | | |

Tabelle 7

| Nr. | Radius | Dicke | Glas |
|---|---|---|---|
| 701 | 21.3815 | 52.856 | |
| 702 | 49.8447 | 3.600 | IG6 |
| 703 | 800.0000 Asphäre | 1.000 | |
| 704 | 61.5954 | 2.500 | ZnSe |
| 705 | Plan | 22.544 | |
| 706 | 13.8307 Asphäre | 26.750 | |
| 707 | 11.0599 | 2.200 | ZnS |
| 708 | 11.1423 | .300 | |
| 709 | 52.5847 | 3.000 | IG6 |
| 710 | Plan | 1.000 | |
| 711 | Plan | 1.000 | Ge |
| 712 | Plan | 2.000 - | |

Tabelle 7   (fortgesetzt)

| Nr. | Radius | Dicke | Glas |
|---|---|---|---|
| | | 8.750 | |
| 713 | Plan | | |

Asphären:
Fläche 703
Konstanten:
Scheitelradius(y) = 800.0000 Kappa(y) = -1.000000
Entwicklungskonstanten:
-.7141412E-05 .2451566E-07 .0000000E+00 .0000000E+00
Fläche 706
Konstanten:
Scheitelradius(y) = 13.8307 Kappa(y) = -1.000000
Entwicklungskonstanten:
-.2700965E-04 -.2305985E-06 .0000000E+00 .0000000E+00

Tabelle 8

| Nr. | Radius | Dicke | Glas |
|---|---|---|---|
| | | 43.145 | |
| 1001 | 28.7553 | | |
| | | 9.406 | IG6 |
| 1002 | 69.8042 | | |
| | | .200 | |
| 1003 | 35.6669 Asphäre | | |
| | | 9.427 | ZnSe |
| 1004 | 14.1804 | | |
| | | 9.538 | |
| 1005 | Plan | | |
| | | 2.400 | |
| 1006 | Plan | | |
| | | 11.000 | |
| 1007 | Plan | | |
| | | 25.000 | |
| 1008 | Plan | | |
| | | 29.512 | |
| 1009 | 58.9472 Asphäre | | |
| | | 12.103 | IG6 |
| 1010 | -139.1986 | | |
| | | 1.720 | |
| 1011 | -92.5450 | | |
| | | 7.500 | ZnS |
| 1012 | -164.2894 | | |
| | | 16.000 | |
| 1013 | Plan | | |
| | | 3.000 | Ge |
| 1014 | Plan | | |
| | | 10.870 | |
| 1015 | Plan | | |

Tabelle 8   (fortgesetzt)

| Nr. | Radius | Dicke | Glas |
|-----|--------|-------|------|
| 1016 | Plan | 19.180 | |

Asphären:
Fläche 1003
Konstanten:
Scheitelradius(y) = 35.66689 Kappa(y) = -1.000000
Entwicklungskonstanten:
-.4340770E-05 -.7385080E-08 .4664680E+11 .0000000E+00
Fläche 1009
Konstanten:
Scheitelradius(y) = 58.94719 Kappa(y) = -1.000000
Entwicklungskonstanten:
-.138106E-05 .375062E-09

Tabelle 9

| Nr. | Radius | Dicke | Glas |
|-----|--------|-------|------|
| 1101 | 28.2915 | 31.600 | |
| 1102 | 58.6324 | 7.742 | IG6 |
| 1103 | 34.9668 Asphäre | .200 | |
| 1104 | 16.1384 | 9.157 | ZnSe |
| 1105 | Plan | 11.909 | |
| 1106 | Plan | 2.400 | ZnSe |
| 1107 | Plan | 11.000 | |
| 1108 | Plan | 25.000 | |
| 1109 | 574.8175 | 29.056 | |
| 1110 | 89.6436 | 8.358 | IG6 |
| 1111 | 35.3622 | .200 | |
| 1112 | 52.0841 | 7.877 | IG6 |
| 1113 | -68.7404 Asphäre | 6.688 | |
| 1114 | -245.3063 | 7.500 | ZnS |
| 1115 | Plan | 3.263 | |
| 1116 | Plan | 3.000 | Ge |

Tabelle 9   (fortgesetzt)

| Nr. | Radius | Dicke | Glas |
|---|---|---|---|
| 1117 | Plan | 13.187 | |
| 1118 | Plan | 16.863 | |

Asphären: Fläche 1103
Konstanten:
Scheitelradius(y) = 34.96675 Kappa(y) = -1.000000
Entwicklungskonstanten:
-.2695330E-05 -.3936930E-08 .0000000E+00 .0000000E+00
Fläche 1113
Konstanten:
Scheitelradius(y) = 68.74035 Kappa(y) = -1.000000
Entwicklungskonstanten:
.474055E-05 -.278672E-08

Tabelle 10

| Nr. | Radius | Dicke | Glas |
|---|---|---|---|
| 1201 | 27.3651 | 38.379 | |
| 1202 | 67.4190 | 9.798 | IG6 |
| 1203 | 34.0009 Asphäre | .200 | |
| 1204 | 13.5531 | 8.440 | ZnSe |
| 1205 | Plan | 7.946 | |
| 1206 | Plan | 2.400 | ZnSe |
| 1207 | Plan | 11.000 | |
| 1208 | Plan | 25.000 | |
| 1209 | 60.0748 Asphäre | 25.705 | |
| 1210 | -118.4977 | 12.361 | IG6 |
| 1211 | -82.1878 | 1.721 | |
| 1212 | -137.3286 | 7.500 | ZnS |
| 1213 | Plan | 16.500 | |
| 1214 | Plan | 3.000 | Ge |

Tabelle 10   (fortgesetzt)

| Nr. | Radius | Dicke | Glas |
|---|---|---|---|
| 1215 | Plan | 10.304 | |
| 1216 | Plan | 19.746 | |
| | | .000 | |

Asphären:
Fläche 1203
Konstanten:
Scheitelradius(y) = 34.00089 Kappa(y) = -1.000000
Entwicklungskonstanten:
-.6158900E-05 -.1050430E-07 .8665520E+00 .0000000E+00
Fläche 1209
Konstanten:
Scheitelradius(y) = 60.07483 Kappa(y) = -1.000000
Entwicklungskonstanten:
-.165072E-05 .47796E-09

**Patentansprüche**

1. Achromatischer und athermalisierter Reimager, bestehend aus einem Frontobjektiv (101) und einer Relaisoptik (102), **dadurch gekennzeichnet, daß** das Frontobjektiv (101) genau aus einer Negativlinse (1,2) aus ZnSe oder ZnS und einer Positivlinse (3, 4) aus Chalkogenidglas, insbesondere IG6 oder IG4, besteht und athermal und achromatisch ist.

2. Achromatischer und athermalisierter Reimager nach Anspruch 1, **dadurch gekennzeichnet, daß** die Relaisoptik (102) aus höchstens drei Linsen besteht.

3. Achromatischer und athermalisierter Reimager nach Anspruch 2, **dadurch gekennzeichnet, daß** eine Negativlinse (6, 7) der Relaisoptik (102) aus ZnSe oder ZnS und eine Positivlinse (8, 9) der Relaisoptik (102) aus dem im Frontobjektiv (101) verwendeten Chalkogenidglas besteht.

4. Achromatischer und athermalisierter Reimager nach Anspruch 1 mit Zwischenbild,

   - achromatisch für einen Wellenlängenbereich umfassend 8-10 μm, insbesondere 7,5 μm bis 10,5 μm, besser als 80 %, vorzugsweise besser als 65 %, der Schärfentiefe,
   - athermal für einen Temperaturbereich von mindestens ± 30° bezogen auf

     Normaltemperatur 20° C,
     insbesondere - 40° C bis + 70° C,
     besser als 60 % der Schärfentiefe,

   - mit genau vier oder fünf Linsen.

5. Achromatischer und athermalisierter Reimager nach Anspruch 1 bestehend aus genau vier Linsen (201, 202; 203, 204; 206, 207; 208, 209), wobei jeweils eine Positivlinse und eine Negativlinse ein Frontobjektiv und eine Relaisoptik bilden und die Negativlinsen (203, 204), 206, 207) aus ZnSe oder ZnS bestehen.

6. Reimager nach mindestens einem der Ansprüche 1-5, **dadurch gekennzeichnet, daß** das Frontobjektiv (101) und die Relaisoptik (102) je einzeln, achromatisch und athermal ausgebildet sind.

7. Reimager nach mindestens einem der Ansprüche 1-6, **dadurch gekennzeichnet, daß** die Brechkraft jeder Linse höchstens 2,2 mal so groß wie die Gesamtbrechkraft ist.

8. Reimager nach mindestens einem der Ansprüche 1-7, **dadurch gekennzeichnet, daß** zwei asphärische Linsenflächen (2, 10) vorgesehen sind.

9. Reimager nach mindestens einem der Ansprüche 1-7, **dadurch gekennzeichnet, daß** eine asphärische Linsenfläche im Frontobjektiv (101) angeordnet ist.

10. Reimager nach mindestens einem der Ansprüche 4-9, **dadurch gekennzeichnet, daß** die Positivlinsen (201, 202; 208, 209) aus Chalkogenidglas bestehen.

11. Reimager nach mindestens einem der Ansprüche 1-10, **dadurch gekennzeichnet, daß** zwischen der letzten Linse (10, 11) und der Austrittspupille (14) eine planparallele Platte (12, 13) eingesetzt ist.

12. Reimager nach mindestens einem der Ansprüche 1-11, **gekennzeichnet durch** die Lage der Austrittspupille (14) in einem Abstand vor der Bildebene (15) von 4-8 mal der halben Bilddiagonale, insbesondere Lage im Wärmeschild eines Kühlgehäuses (21) mit darin in der Bildebene (15) angeordnetem IR-Detektor (20).

13. Reimager nach mindestens einem der Ansprüche 1-12, **gekennzeichnet durch** die Anordnung einer Narzißblende in der Zwischenbildebene (14).

14. Reimager nach mindestens einem der Ansprüche 1-13, **gekennzeichnet durch** eine maximale Brennweitenvariation über alle Temperaturen von - 40° C bis + 70° C und Wellenlängen von 7,5 µm bis 10,5 µm von ± 0,5 %.

15. Reimager nach Anspruch 14, **dadurch gekennzeichnet, daß** die maximale Schnittweitenablage innerhalb der beugungsbegrenzten Schärfentiefe liegt.

16. Reimager nach mindestens einem der Ansprüche 1-15, **dadurch gekennzeichnet, daß** die Form asphärischer Linsenflächen (2, 10) als Pfeilhöhe (P) als Funktion des Linsenradius (H) als Potenzreihenentwicklung mit nur geraden Exponenten beschrieben ist.

17. Reimager nach mindestens einem der Ansprüche 4-16, **dadurch gekennzeichnet, daß** die Linsen (1, 2; 3, 4) des Frontobjektivs (101) aus nur zwei verschiedenen Materialien bestehen.

18. Reimager nach Anspruch 17, **dadurch gekennzeichnet, daß** alle Linsen aus nur zwei verschiedenen Materialien bestehen.

19. Reimager nach mindestens einem der Ansprüche 1-18 insbesondere nach Anspruch 11, **dadurch gekennzeichnet, daß** eine Planplatte (12, 13) aus Germanium vorhanden ist.

20. Reimager nach mindestens einem der Ansprüche 1-19, **dadurch gekennzeichnet, daß** hinter dem Frontobjektiv (1001-1004) eine Planplatte (1005, 1006) angeordnet ist.

21. Reimager nach Anspruch 20, **dadurch gekennzeichnet, daß** die Planplatte (1005, 1006) kippbar ist, in der Bildebene (1016) ein zweidimensionaler Raster-IR-Detektor (1020) angeordnet ist und das Kippen der Planplatte (1005, 1006) eine Auflösungssteigerung nach dem "Interlace"-Verfahren bewirkt. (Fig. 10)

**Claims**

1. Achromatic and athermalized reimager, consisting of a front objective lens (101) and a relay optics (102), **characterized in that** the front objective lens. (101). consists precisely of one negative lens (1, 2) made from ZnSe or ZnS and one positive lens (3, 4) made from chalcogenide glass, in particular IG6 or IG4, and is athermal and achromatic.

2. Achromatic and athermalized reimager according to Claim 1, **characterized in that** the relay optics (102) consists of at most three lenses.

3. Achromatic and athermalized reimager according to Claim 2, **characterized in that** one negative lens (6, 7) of the relay optics (102) consists of ZnSe or ZnS, and one positive lens (8, 9) of the relay optics (102) consists of the chalcogenide glass used in the front objective lens (101).

4. Achromatic and athermalized reimager according to Claim 1 with intermediate image, which is

- achromatic for a wavelength region comprising 8-10 µm, in particular 7.5 µm to 10.5 µm, better than 80%, preferably better than 65%, of the depth of field, and
- athermal for a temperature range of at least ±30° referred to

    standard temperature 20°C,
    in particular -40°C to +70°C,
    better than 60% of the depth of field, and

- having precisely four or five lenses.

5. Achromatic and athermalized reimager according to Claim 1, comprising precisely four lenses (201, 202; 203, 204; 206, 207; 208, 209), in each case one positive lens and one negative lens forming a front objective lens and a relay optics, and the negative lenses (203, 204, 206, 207) consisting of ZnSe or ZnS.

6. Reimager according to at least one of Claims 1-5, **characterized in that** the front objective lens (101) and the relay optics (102) are each individually of achromatic and athermal design.

7. Reimager according to at least one of Claims 1-6, **characterized in that** the refractive power of each lens is at most 2.2 times as much as the total refractive power.

8. Reimager according to at least one of Claims 1-7, **characterized in that** two aspherical lens surfaces (2, 10) are provided.

9. Reimager according to at least one of Claims 1-7, **characterized in that** an aspherical lens surface is arranged in the front objective lens (101).

10. Reimager according to at least one of Claims 4-9, **characterized in that** the positive lenses (201, 202; 208, 209) consist of chalcogenide glass.

11. Reimager according to at least one of Claims 1-10, **characterized in that** a plane-parallel plate (12, 13) is inserted between the last lens (10, 11) and the exit pupil (14).

12. Reimager according to at least one of Claims 1-11, **characterized by** the position of the exit pupil (14) at a distance in front of the image plane (15) of 4-8 times of half the image diagonal, in particular a position in the heat shield of a cooling housing (21) having therein an IR detector (20) arranged in the image plane (15).

13. Reimager according to at least one of Claims 1-12, **characterized by** the arrangement of a narcissus stop in the intermediate image plane (14).

14. Reimager according to at least one of Claims 1-13, **characterized by** a maximum focal length variation of ±0.5% over all temperatures from -40°C to +70°C and wavelengths from 7.5 µm to 10.5 µm.

15. Reimager according to Claim 14, **characterized in that** the maximum offset in back focal distance is within the defraction-limited depth of field.

16. Reimager according to at least one of Claims 1-15, **characterized in that** the shape of aspherical lens surfaces (2, 10) as sagitta (P) is described as a function of the lens radius (H) as a power series expansion using only even exponents.

17. Reimager according to at least one of Claims 4-16, **characterized in that** the lenses (1, 2; 3, 4) of the front objective lens (101) consist of only two different materials.

18. Reimager according to Claim 17, **characterized in that** all the lenses consist of only two different materials.

**19.** Reimager according to at least one of Claims 1-18, in particular according to Claim 11, **characterized in that** a plane plate (12, 13) made from germanium is present.

**20.** Reimager according to at least one of Claims 1-19, **characterized in that** a plane plate (1005, 1006) is arranged behind the front objective lens (1001-1004).

**21.** Reimager according to Claim 20, **characterized in that** the plane plate (1005, 1006) can be tilted, a two-dimensional scanning IR detector (1020) is arranged in the image plane (1016), and the tilting of the plane plate (1005, 1006) effects an increase in resolution by using the interlace method. (Fig. 10)

**Revendications**

**1.** Dispositif pour réimager achromatique et athermalisé, constitué d'un objectif frontal (101) et d'une optique relais (102), **caractérisé en ce que** l'objectif frontal (101) est constitué exactement d'une lentille divergente (1,2) en ZnSe ou en ZnS et d'une lentille convergente (3,4) en verre de chalcogénure, en particulier en IG6 ou IG4, et est athermique et achromatique.

**2.** Dispositif pour réimager achromatique et athermalisé selon la revendication 1, **caractérisé en ce que** l'optique relais (102) est constitué d'au maximum trois lentilles.

**3.** Dispositif pour réimager achromatique ou athermalisé selon la revendication 2, **caractérisé en ce qu'**une lentille divergente (6,7) de l'optique relais (102) est constituée de ZnSe ou de ZnS et une lentille convergente (8,9) de l'optique relais (102) est constituée du verre de chalcogénure utilisé pour l'objectif frontal (101).

**4.** Dispositif pour réimager achromatique et athermalisé selon la revendication 1 avec image intermédiaire,

- achromatique pour un domaine de longueurs d'onde comprenant 8-10 µm, en particulier 7,5 µm à 10,5 µm, meilleur que 80%, de préférence meilleur que 65%, de la profondeur de champ,
- athermique pour un intervalle de températures d'au moins ± 30° par rapport à la température normale de 20°C, en particulier de -40°C à + 70°C, meilleur que 60% de la profondeur de champ,
- présentant exactement quatre ou cinq lentilles.

**5.** Dispositif pour réimager selon la revendication 1 constitué d'exactement quatre lentilles (201,202 ; 203,204 ; 206,207 ; 208,209), dans lequel une lentille convergente et une lentille divergente forment respectivement un objectif frontal, et une optique relais et les lentilles divergentes (203,204), (206,207) sont constituées de ZnSe ou de ZnS.

**6.** Dispositif pour réimager selon au moins une quelconque des revendications 1-5, **caractérisé en ce que** l'objectif frontal (101) et l'optique relais (102) sont chacun en particulier conçus de façon à être achromatiques et athermiques.

**7.** Dispositif pour réimager selon au moins une quelconque des revendications 1-6, **caractérisé en ce que** le pouvoir de réfraction de chaque lentille est tout au plus 2,2 fois aussi fort que le pouvoir de réfraction total.

**8.** Dispositif pour réimager selon au moins une quelconque des revendications 1-7, **caractérisé en ce que** deux surfaces de lentille asphériques (2,10) sont prévues.

**9.** Dispositif pour réimager selon au moins l'une quelconque des revendications 1-7, **caractérisé en ce qu'**une surface asphérique de lentille est disposée dans l'objectif frontal (101).

**10.** Dispositif pour réimager selon au moins une quelconque des revendications 4-9, **caractérisé en ce que** les lentilles convergentes (201,202 ; 208,209) sont constituées de chalcogénure.

**11.** Dispositif pour réimager selon au moins une quelconque des revendications 1-10, **caractérisé en ce qu'**entre la dernière lentille (10,11) et la pupille de sortie (14) est insérée une plaque à faces planes et parallèles (12 , 13).

**12.** Dispositif pour réimager selon au moins une quelconque des revendications 1-11, **caractérisé par** la position de la pupille de sortie (14) à une distance devant le plan d'image (15) de 4-8 fois la demi-diagonale d'image, en particulier par la position dans le bouclier thermique d'une enveloppe de refroidissement (21) avec un détecteur à infrarouge (20) disposé à l'intérieur de celle-ci.

13. Dispositif pour réimager selon au moins une quelconque des revendications 1-12, **caractérisé par** la disposition d'un diaphragme de narcisse dans le plan d'image intermédiaire (14).

14. Dispositif pour réimager selon au moins une des revendications 1-13, **caractérisé par** une variation maximale de distance focale de $\pm$ 0,5% sur toutes les températures de -40°C jusqu'à +70°C et sur toutes les longueurs d'onde de 7,5 μm à 10,5 μm.

15. Dispositif pour réimager selon la revendication 14, **caractérisé en ce que** l'écart maximal de largeur de taille se trouve à l'intérieur de la profondeur de champ limitée par la diffraction.

16. Dispositif pour réimager selon au moins l'une quelconque des revendications 1-15, **caractérisé en ce que** la forme des surfaces asphériques (2,10) de lentille est décrite en tant que flèche (P) en fonction du rayon de lentille (H), ladite fonction présentant un développement en série de puissances avec uniquement des exposants pairs.

17. Dispositif pour réimager selon au moins une quelconque des revendications 4-16, **caractérisé en ce que** les lentilles (1,2 ; 3,4) de l'objectif frontal (101) est constitué de seulement deux matériaux différents.

18. Dispositif pour réimager selon la revendication 17, **caractérisé en ce que** toutes les lentilles sont constituées de seulement deux matériaux différents.

19. Dispositif pour réimager selon au moins une quelconque des revendications 1-18 en particulier selon la revendication 11, **caractérisé en ce qu'**une plaque plane (12,13) en germanium est présente.

20. Dispositif pour réimager selon l'une quelconque des revendications 1-19 **caractérisé en ce qu'**une plaque plane (1005,1006) est disposée derrière l'objectif frontal (1001,1004).

21. Dispositif selon la revendication 20,
**caractérisé en ce que** la plaque plane (1005,1006) peut être basculée, un détecteur à infrarouge à grille bidimensionnel est disposé dans le plan d'image (1016) et le basculement de la plaque plane (1005,1006) a pour effet d'augmenter la résolution selon le procédé « Interlace ». (Fig. 10)

FIG.1

## FIG. 2

## FIG. 3

## FIG. 4

## FIG. 5

## FIG. 6

## FIG. 7

## FIG. 8

## FIG.9

Beugungs MTF

YB=-1.310

YB=-1.134

YB=-.925

YB=-.653

YB=0.000
Sagittal +——+  tangent. -ϒ---ϒ

KONTRAST

1.
.8
.6
.4
.2
.0

Freq=20

0   10   20   30   40   -60  0  60

# FIG. 10

*FIG. 11*

*FIG. 12*

# FIG. 13

| | RELATIVE FELDHÖHE | BILD-WINKEL |
|---|---|---|
| ----------BEUGUNGS-GRENZE | | |
| ————ACHSE | | |
| ————— TANGENTIAL | 0.6 | 4.95° |
| ———····· RADIAL | | |
| ——— — — TANGENTIAL | 0.8 | 6.12° |
| ——····· — RADIAL | | |
| —— —— TANGENTIAL | 1.0 | 7.65° |
| ··· — —·—·— RADIAL | | |

ORTSFREQUENZ (LPM)

EP 0 783 121 B1